# EUROPEAN PATENT APPLICATION

(11) **EP 4 807 492 A1**
(43) Date of publication of application: **16.09.2026**
(21) Application number: 25768490.2
(22) Date of filing: 04.02.2025
(51) Int. Cl.: G06F 1/16

(54) **DISPLAY HAVING BUFFER STRUCTURE AND ELECTRONIC DEVICE COMPRISING SAME**

(30) Priority: 04.03.2024 KR 20240030968; 15.04.2024 KR 20240050223
(71) Applicant: Samsung Electronics Co., Ltd., Suwon-si, Gyeonggi-do 16677 (KR)
(72) Inventor: LEE, Ohhee, Suwon-si, Gyeonggi-do 16677 (KR); KIM, Woonbae, Suwon-si, Gyeonggi-do 16677 (KR); CHOI, Jongchul, Suwon-si, Gyeonggi-do 16677 (KR)
(74) Representative: Nederlandsch Octrooibureau
(86) International application number: PCT/KR2025/001624
(87) International publication number: WO 2025/187966

(57) **Abstract**

An electronic device according to various embodiments of the present disclosure comprises a display. The display comprises: a peripheral circuit portion comprising a panel layer configured to display visual information in a first direction, a rear layer positioned in a direction opposite to the first direction with respect to the panel layer, and a conductive pattern electrically connected to the panel layer, the peripheral circuit portion extending from the edge of the display in a second direction perpendicular to the first direction, the peripheral circuit portion comprising a bending portion which is bent such that one end of the peripheral circuit portion is positioned on the rear back portion of the display; a protective member comprising first resin positioned on a surface of the bending portion facing in the second direction; and a buffer area positioned between a surface of the rear layer facing in the second direction and the bending portion.

## Description

### [Technical Field]

Various embodiments of the disclosure relate to a display of an electronic device and, more particularly, to a display having a buffer structure and an electronic device including the same.

### [Background Art]

An electronic device may include a display configured to output visual information. The display may include an information display region and a peripheral circuit formed around the information display region. The peripheral circuit may connect pixels formed in the information display region of the display to a driving circuit of the display (e.g., a display driver IC (DDI)). The peripheral circuit of the display may be formed on a member such as a flexible printed circuit board and/or a chip on plastic (COP).

The display may include a protective member to protect an end portion of the display. For example, the protective member may be formed by molding resin on an end portion or an edge portion of the display.

### [Disclosure]

### [Technical Solution]

In order to increase a ratio of an area for an information display region on a front surface of an electronic device and to reduce an area of an inactive region (e.g., a bezel), at least a portion of a peripheral circuit may be bent and disposed on a rear surface of the display. The peripheral circuit portion of the display may be protected by a protective member. When the protective member is formed by resin molding, resin may be injected and cured on both outer and inner surfaces of a bending portion of the peripheral circuit. Despite the presence of the protective member, an impact applied from outside the electronic device may be directly transmitted to the bending portion through the protective member. Because the peripheral circuit portion is vulnerable to impact, conductive patterns of the peripheral circuit may be damaged, thereby increasing a risk that the display of the electronic device malfunctions or fails.

Various embodiments of the disclosure may provide a display having a reduced risk of damage to a peripheral circuit portion at a side surface of the display, and an electronic device including the display.

The electronic device according to various embodiments of the present disclosure may be an electronic device including a display.

The display may be disposed under a transparent cover layer.

The display may include a back layer disposed under the transparent cover layer.

The display may include a panel layer disposed under the transparent cover layer and above the back layer. The panel layer may include a bending portion and a flat portion extending from the bending portion, and the bending portion may be bent such that the flat portion is disposed under the back layer.

The display may include a protective member including a first resin portion covering an outer circumferential surface of the bending portion, and an air gap region positioned between a side surface of the back layer and the bending portion. In the air gap region, at least one of side ends may be at least partially closed by at least one blocking member.

A display according to various embodiments of the disclosure may include a panel layer configured to display visual information in a first direction, the panel layer including a bending portion and a flat portion extending from the bending portion, and a back layer positioned in a direction opposite to the first direction with respect to the panel layer. The bending portion may be bent such that the flat portion is positioned in the direction opposite to the first direction with respect to the back layer. The display may further include a protective member including a first resin portion positioned on a surface of the bending portion oriented in a second direction. The display may further include an air gap region positioned between a surface of the back layer oriented in the second direction and the bending portion.

Various embodiments of the disclosure may provide a display in which a buffer region formed inside the bending portion of the peripheral circuit portion absorbs an impact transmitted through the protective member, thereby reducing a risk of damage and failure due to external impact.

### [Description of Drawings]

FIG. 1 is a block diagram of an exemplary electronic device capable of performing operations described herein.
FIG. 2A is a front perspective view of an electronic device according to various embodiments of the disclosure.
FIG. 2B is a rear perspective view of the electronic device according to various embodiments of the disclosure.
FIG. 3 is an exploded perspective view of the electronic device according to various embodiments of the disclosure.
FIG. 4A is a front view illustrating a display of an electronic device according to various embodiments of the disclosure.
FIG. 4B is a rear view illustrating the display of the electronic device according to various embodiments of the disclosure.
FIG. 4C is a cross-sectional view of the display of the electronic device according to various embodiments of the disclosure.
FIG. 5A is a cross-sectional view of a display according to an embodiment of the disclosure.
FIG. 5B is a cross-sectional view of a display according to a comparative example.
FIG. 6A is a rear view of a display according to various embodiments.
FIG. 6B is a perspective view illustrating a blocking member of a display according to various embodiments.
FIG. 6C is a rear view of the display according to various embodiments.
FIG. 6D is an enlarged view of the display according to various embodiments.
FIG. 7A is a plan view of a display according to various embodiments.
FIG. 7B is a cross-sectional view of the display according to various embodiments.
FIG. 7C is a perspective view of a bracket according to various embodiments.
FIG. 7D is a perspective view illustrating operations of arranging the bracket according to various embodiments on a display.
FIG. 8A is a cross-sectional view illustrating a display according to various embodiments.
FIG. 8B is a view illustrating the display according to various embodiments in a plan view and a perspective view.
FIG. 9A is a cross-sectional view of the display according to various embodiments.
FIG. 9B is a view illustrating an operation of manufacturing the display according to various embodiments of the disclosure.

### [Mode for Invention]

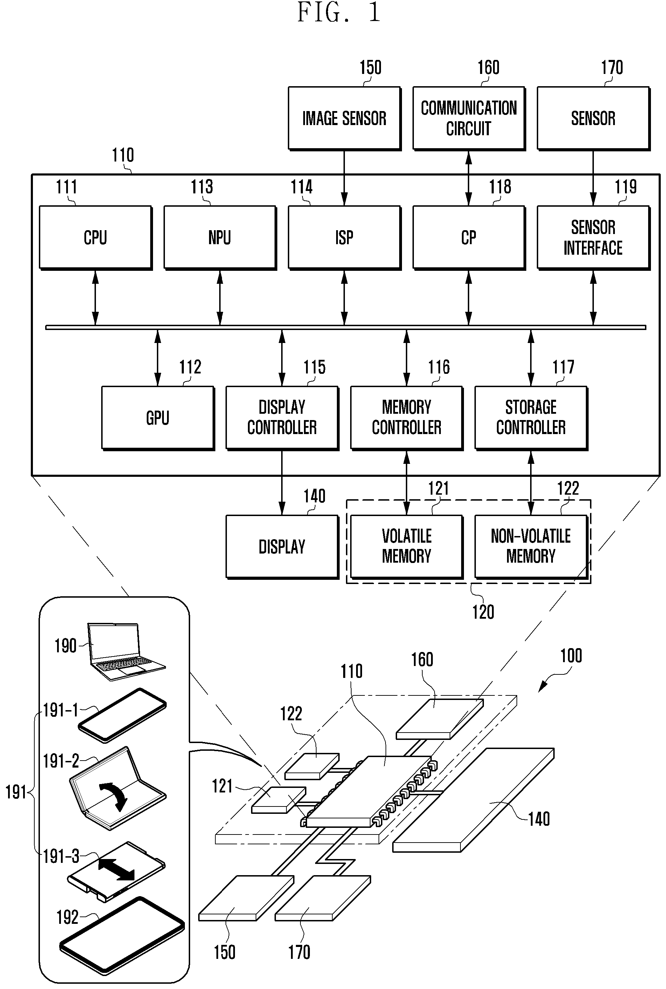

FIG. 1 is a block diagram of an exemplary electronic device 100 capable of performing operations described herein.

Referring to FIG. 1, the electronic device 100 may be one of various types of electronic devices, such as a laptop 190, smartphones 191 having various form factors (e.g., a bar-type smartphone 191-1, a foldable-type smartphone 191-2, or a slidable (or rollable) smartphone 191-3), a tablet 192, a cellular phone (not illustrated), and other similar computing devices (not illustrated). The components illustrated in FIG. 1, their relationships, and their functions are merely exemplary and are not intended to limit the implementations described or claimed herein. The electronic device 100 may be referred to as a mobile device, a user device, a multifunction device, a portable device, or a server.

The electronic device 100 may include components including at least one processor 110 (hereinafter referred to as a processor 110), at least one memory 120 (hereinafter referred to as a memory 120), at least one display 140 (hereinafter referred to as a display 140), at least one image sensor 150 (hereinafter referred to as an image sensor 150), at least one communication circuit 160 (hereinafter referred to as a communication circuit 160), and/or at least one sensor 170 (hereinafter referred to as a sensor 170). The above-described components are merely exemplary. For example, the electronic device 100 may include other components (e.g., a power management integrated circuit (PMIC), an audio processing circuit, an antenna, a rechargeable battery, or an input/output interface). For example, some components may be omitted from the electronic device 100. For example, some components may be integrated into a single component.

The processor 110 may be implemented as one or more integrated circuit (IC) chips and may perform various data processing operations. The processor 110 may include at least one electrical circuit and may individually or collectively process instructions (or programs or data) stored in the memory 120 in a distributed manner. The processor 110 may include a processor set including one or more processing circuits. The processor 110 may include any operative processing circuitry configured to control performance and operations of one or more components of the electronic device 100 (e.g., the memory 120, the display 140, the image sensor 150, the communication circuit 160, and/or the sensor 170). For example, the processor 110 (e.g., an application processor (AP)) may be implemented as a system on chip (SoC) (e.g., a single chip or a chipset). For example, the processor 110 may be implemented with a plurality of cores (or at least one core circuit), a plurality of chips, or a plurality of chipsets. For example, the processor 110 may include one or more processing circuits. For example, the processor 110 may include one or more processing circuits configured to perform various functions of the disclosure individually and/or collectively. As a non-limiting example, at least a portion of the processor 110 may be included in a first chip of the electronic device 100, and at least another portion of the processor 110 may be included in a second chip of the electronic device 100 different from the first chip.

For example, the processor 110 may include a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely exemplary. For example, the processor 110 may further include other components. For example, some components of the processor 110 may be omitted from the processor 110. For example, some components of the processor 110 may be included outside the processor 110 as separate components of the electronic device 100. For example, some components of the processor 110 (e.g., the memory controller 116) may be included in other components (e.g., at least a portion of the memory 120, an interface available for connection to at least one component of the electronic device 100, the display 140, and/or the image sensor 150).

The processor 110 may cause other components of the electronic device 100 to perform various operations by executing instructions stored in the memory 120. The CPU 111 (or central processing circuitry) may be configured to control components of the processor 110 based on execution of instructions stored in the memory 120 (e.g., the volatile memory 121 and/or the non-volatile memory 122). The GPU 112 (or graphics processing circuitry) may be configured to perform parallel computations (e.g., rendering). The NPU 113 (or neural processing circuitry, or an artificial intelligence (AI) chip) may be configured to perform computations for an artificial intelligence model (e.g., convolution computations). The ISP 114 (or image signal processing circuitry) may be configured to process a raw image acquired through the image sensor 150 into a format suitable for components of the electronic device 100 or components of the processor 110. The display controller 115 (or display control circuitry, or a display processing unit (DPU)) may be configured to process an image acquired from the CPU 111, the GPU 112, the ISP 114, or the memory 120 (e.g., the volatile memory 121) into a format suitable for the display 140. The memory controller 116 (or memory control circuitry) may be configured to control reading of data from the volatile memory 121 and writing of data to the volatile memory 121. The storage controller 117 (or storage control circuitry) may be configured to control reading of data from the non-volatile memory 122 and writing of data to the non-volatile memory 122. The CP 118 (communication processing circuitry) may be configured to process data acquired from components of the processor 110 into a format suitable for transmission to another electronic device through the communication circuit 160, or to process data acquired from another electronic device through the communication circuit 160 into a format suitable for processing by components of the processor 110. For example, the communication circuit 160 may include one or more communication circuits. The sensor interface 119 (or sensing data processing circuitry, or a sensor hub) may be configured to process data acquired through the sensor 170, regarding a state of the electronic device 100 and/or a state of an environment surrounding the electronic device 100, into a format suitable for components of the processor 110.

The memory 120 may include one or more storage media (or one or more storage devices). For example, the memory 120 may include a memory assembly including one or more storage media. For example, the one or more storage media may include permanent memory (e.g., the non-volatile memory 122), such as a hard drive, flash memory, or read-only memory (ROM), semi-permanent memory (e.g., the volatile memory 121), such as random access memory (RAM), any other suitable type of storage (or storage assembly), or any combination thereof. The memory 120 may include cache memory, which is one or more different types of memory used to temporarily store data for a function or feature of the electronic device 100. As a non-limiting example, the cache memory may be included in the processor 110. The memory 120 may be fixedly embedded in the electronic device 100 or may be incorporated into one or more suitable types of components (e.g., a subscriber identity module (SIM) card and/or a secure digital (SD) card) that may be repeatedly inserted into and removed from the electronic device 100.

For example, the memory 120 may store one or more software applications, such as operating system (or system) software applications, firmware software applications, driver software applications, plug-in (e.g., add-in, add-on, and/or applet) software applications, and/or any other suitable software applications. For example, the one or more software applications may include instructions executable by the processor 110. For example, the memory 120 may store instructions callable by an application programming interface (API). For example, the memory 120 may store instructions in a library.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

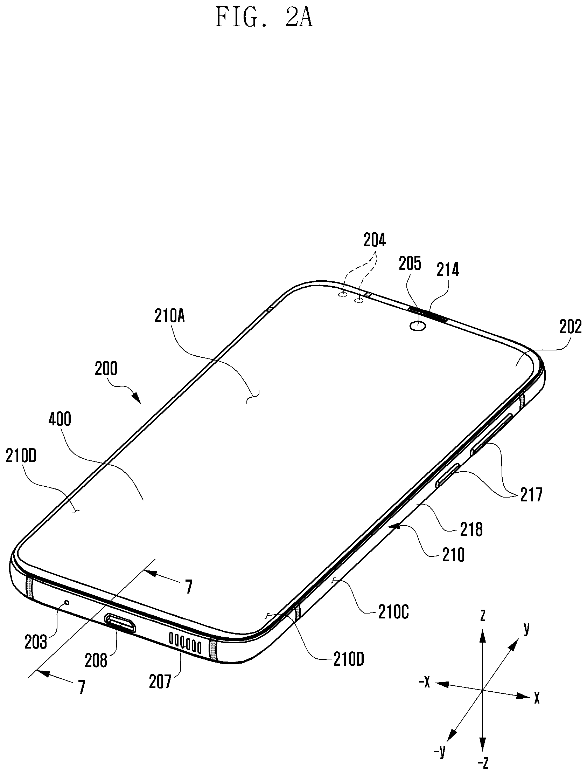

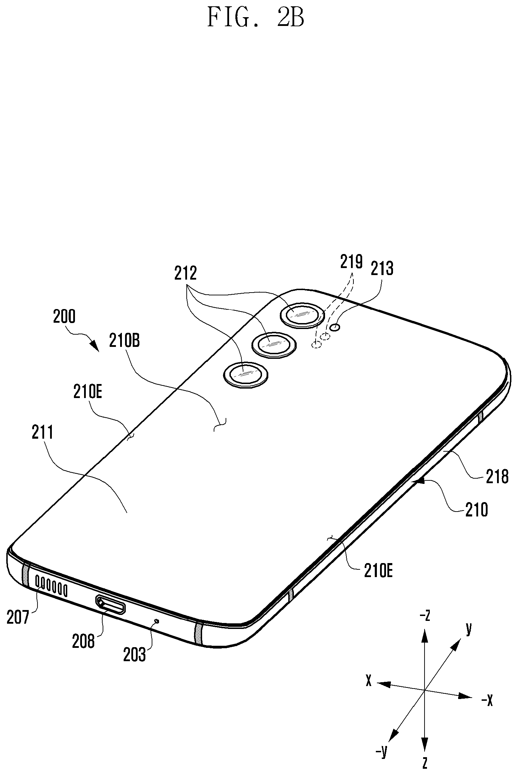

FIG. 2A is a front perspective view of an electronic device according to various embodiments of the disclosure. FIG. 2B is a rear perspective view illustrating the electronic device of FIG. 2A according to various embodiments of the disclosure.

The electronic device 200 of FIGS. 2A and 2B may be at least partially similar to the electronic device 100 of FIG. 1, or may include other embodiments of the electronic device.

Referring to FIGS. 2A and 2B, the electronic device 200 according to an embodiment may include a housing 210 having a first surface (or a front surface) 210A, a second surface (or a rear surface) 210B, and a side surface 210C surrounding the space between the first surface 210A and the second surface 210B. In an embodiment (not illustrated), the term "housing 210" may refer to a structure forming a part of the first surface 210A, the second surface 210B, and the side surface 210C. According to an embodiment, the first surface 210A may be formed, at least in part, by a substantially transparent front surface plate 202 (e.g., a glass plate including various coating layers, or a polymer plate, which may be referred to as a transparent cover layer, a front surface plate, or a window). The second surface 210B may be formed by a substantially opaque rear surface plate 211. The rear surface plate 211 may be made of, for example, coated or colored glass, ceramic, polymer, metal (e.g., aluminum, stainless steel (STS), or magnesium), or a combination of two or more of these materials. The side surface 210C may be formed by a side surface frame (or "side surface member") 218 that is coupled to the front surface plate 202 and the rear surface plate 211 and includes metal and/or polymer. In an embodiment, the rear surface plate 211 and the side surface frame 218 may be integrally formed with each other and may include the same material (e.g., a metal material such as aluminum).

In the illustrated embodiment, the front surface plate 202 may include, at the opposite long edges thereof, first regions 210D, which are bent from the first surface 210A toward the rear surface plate and extend seamlessly. In the illustrated embodiment (see FIG. 2B), the rear surface plate 211 may include, at the opposite long edges thereof, second regions 210E, which are bent from the second surface 210B toward the front surface plate and extend seamlessly. In some embodiments, the front surface plate 202 or the rear surface plate 211 may include only the first regions 210D or only the second regions 210E. In some embodiments, the front surface plate 202 and the rear surface plate 211 may not include the first regions and the second regions and may include only a flat plane disposed parallel to the second surface 210B. In the above embodiments, when viewed from a side of the electronic device, the side surface frame 218 may have a first thickness (or width) on a side that does not include the first regions 210D or the second regions 210E, and may have a second thickness smaller than the first thickness on a side that includes the first region or the second region.

According to an embodiment, the electronic device 200 may include at least one of a display 400, an input device 203, sound output devices 207 and 214, sensor modules 204 and 219, camera modules 205, 212, and 213, key input devices 217, an indicator (not illustrated), or a connector 208. In some embodiments, at least one of the components (e.g., the key input devices 217 or the indicator) may be omitted from the electronic device 200 or other components may be additionally included.

The display 400 may be exposed through a substantial portion of, for example, the front surface plate 202. In some embodiments, the display 400 may be at least partially exposed through the front surface plate 202, which defines the first surface 210A and the first regions 210D of the side surface 210C. The display 400 may be coupled to or disposed adjacent to a touch detection circuit, a pressure sensor configured to measure a touch intensity (pressure), and/or a digitizer configured to detect a magnetic field-type stylus pen. In some embodiments, at least some of the sensor modules 204 and 219 and/or at least some of the key input devices 217 may be disposed in the first regions 210D and/or the second regions 210E.

The input device 203 may include a microphone. In some embodiments, the input device 203 may include a plurality of microphones arranged to detect the direction of sound. The sound output devices 207 and 214 may include speakers. The speakers may include an external speaker 207 and a receiver 214 for a voice call. In some embodiments, the microphone, the speakers, and the connector 208 may be arranged in the space of the electronic device 200 and may be exposed to the external environment through at least one hole formed in the housing 210. In some embodiments, a hole formed in the housing 210 may be used jointly for the microphone and speakers. In some embodiments, the sound output devices 207 and 214 may include a speaker that operates without a hole in the housing 210 (e.g., a piezo speaker). In some embodiments, the electronic device 200 may include a tray member disposed through at least a portion of the side surface frame 218.

The sensor modules 204 and 219 may generate electrical signals or data values corresponding to an internal operating state or an external environmental state of the electronic device 200. The sensor modules 204 and 219 may include, for example, a first sensor module 204 (e.g., a proximity sensor), a second sensor module (not illustrated) (e.g., a fingerprint sensor) placed on the first surface 210A of the housing 210, and/or a third sensor module 219 (e.g., an HRM sensor) placed on the second surface 210B of the housing 210. The fingerprint sensor may be placed on the first surface 210A of the housing 210. The fingerprint sensor (e.g., an ultrasonic fingerprint sensor or an optical fingerprint sensor) may be disposed under the display 400 of the first surface 210A. The electronic device 200 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 204.

The camera modules 205, 212, and 213 may include a first camera device 205 disposed on the first surface 210A of the electronic device 200, and a second camera device 212 and/or a flash 213 disposed on the second surface 210B. The camera modules 205 and 212 may include one or more lenses, an image sensor, and/or an image signal processor. The flash 213 may include, for example, a light-emitting diode or a xenon lamp. In some embodiments, two or more lenses (e.g., a wide-angle lens and a telephoto lens) and image sensors may be disposed on one surface of the electronic device 200.

The key input devices 217 may be disposed on the side surface 210C of the housing 210. In an embodiment, the electronic device 200 may not include some or all of the above-described key input devices 217, and a key input device 217 not included may be implemented in another form, such as a soft key, on the display 400. In an embodiment, the key input devices 217 may be implemented using pressure sensors included in the display 400.

The indicator may be disposed, for example, on the first surface 210A of the housing 210. The indicator may provide, for example, the state information of the electronic device 200 in an optical form. In an embodiment, the light-emitting element may provide, for example, a light source that operates in conjunction with the operation of the camera module 205. The indicator may include, for example, an LED, an IR LED, and a xenon lamp.

The connector holes 208 may include a first connector hole 208 capable of accommodating a connector (e.g., a USB connector or an interface connector port (IF) module) configured to transmit/receive power and/or data to/from an external electronic device, and/or a second connector hole (or an earphone jack) capable of accommodating a connector configured to transmit/receive an audio signal to/from an external electronic device.

Some camera modules 205 among the camera modules 205 and 212, some sensor modules 204 among the sensor modules 204 and 219, or the indicator may be disposed to be exposed through the display 400. For example, a camera module 205, a sensor module 204, or an indicator may be disposed in an inner space of the electronic device 200 so as to come into contact with an external environment through an opening perforated from the display 400 to the front surface plate 202 or transmission region. In an embodiment, the region where the display 400 and the camera modules 205 face each other may be configured as a transmission region with a predetermined transmittance as a portion of a content display region. In an embodiment, the transmission region may have a transmittance ranging from about 5% to about 20%. The transmission region may include a region overlapping an effective region (e.g., a field of view region) of the camera module 205 through which light passes to form an image on the image sensor. For example, the transmission region of the display 400 may include a region having a lower pixel density than the periphery. For example, the transmission region may replace the opening. For example, the camera module 205 may include an under-display camera (UDC). In an embodiment, some sensor modules 204 may be disposed in the inner space of the electronic device so as to perform their functions without being visually exposed through the front surface plate 202. For example, in this case, the region of the display 400 facing the sensor module may not require a perforated opening.

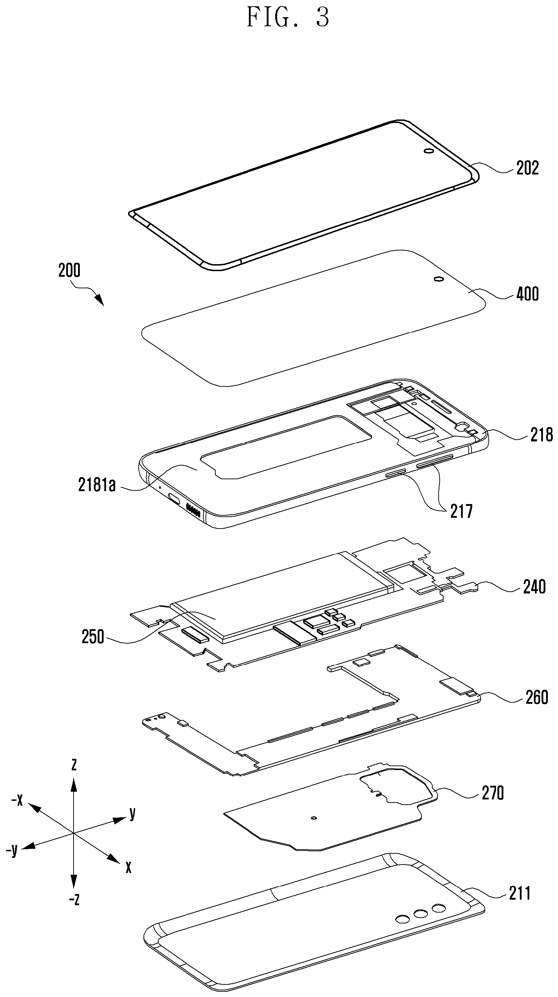

FIG. 3 is an exploded perspective view of the electronic device of FIG. 2A according to various embodiments of the disclosure.

Referring to FIG. 3, the electronic device 200 may include a side surface member 218 (e.g., the side surface frame 218 of FIGS. 2A and 2B), an inner frame 2181a (e.g., an extension member or a support member), a front surface plate 202 (which may be referred to as a transparent cover layer, a front cover, or a window layer), a display 400, a substrate 240, a battery 250, a support bracket 260 (e.g., a rear case or a support member), an antenna 270, and a rear surface plate 211 (e.g., a rear surface cover). In some embodiments, at least one of the components of the electronic device 200 (e.g., the inner frame 2181a or the support bracket 260) may be omitted, or additional components may be included. At least one component of the electronic device 200 may be the same as or similar to at least one component of the electronic device 200 of FIG. 2A or FIG. 2B, and a redundant description will be omitted below.

According to various embodiments, the inner frame 2181a may be disposed inside the electronic device 200 and may be structurally coupled to the side member 218 or integrally formed with the side member 218. The inner frame 2181a may be formed of, for example, a metal material and/or a non-metal material (e.g., polymer). The display 400 may be coupled to one surface of the inner frame 2181a, and the substrate 240 may be coupled to an opposite surface thereof. A processor, memory, and/or an interface may be mounted on the substrate 240. The processor may include, for example, one or more of a central processing unit, an application processor, a graphics processing unit, an image signal processor, a sensor hub processor, or a communication processor.

The memory may include, for example, volatile memory or nonvolatile memory.

The interface may include, for example, a high-definition multimedia interface (HDMI), a universal serial bus (USB) interface, an SD card interface, and/or an audio interface. The interface may electrically or physically connect, for example, the electronic device 200 to an external electronic device, and may include a USB connector, an SD card/a multi-media card (MMC) connector, or an audio connector.

The battery 250 may serve as a device that supplies power to at least one component of the electronic device 200, and may include, for example, a non-rechargeable primary cell, a rechargeable secondary cell, or a fuel cell. At least a portion of the battery 250 may be disposed to be substantially flush with, for example, the substrate 340. The battery 250 may be integrally arranged inside the electronic device 200. In an embodiment, the battery 250 may be detachably disposed in the electronic device 200.

The antenna 270 may be disposed between the rear surface plate 211 and the battery 250. The antenna 270 may include, for example, a near-field communication (NFC) antenna, a wireless charging antenna, and/or a magnetic secure transmission (MST) antenna. For example, the antenna 270 may execute short-range communication with an external device or may transmit/receive power required for charging to/from an external device in a wireless manner. In an embodiment, an antenna structure may be formed by at least a portion of the side surface member 218 and/or the inner frame 2181a, or a combination thereof.

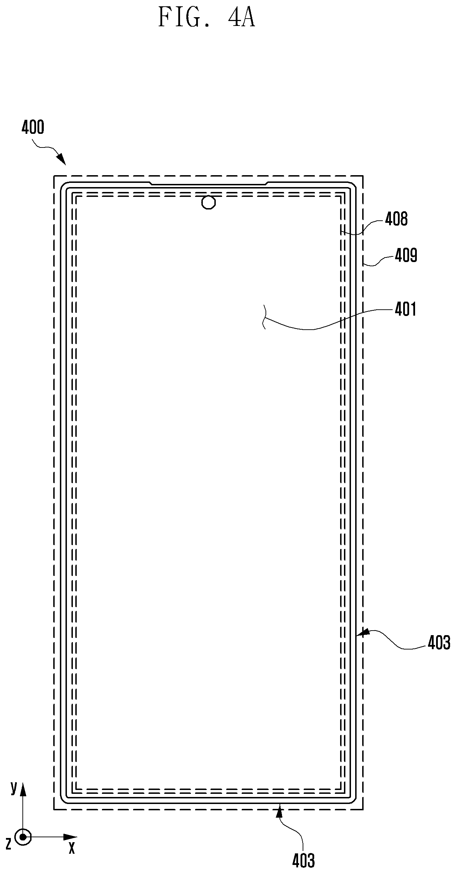

FIG. 4A is a front view illustrating a display 400 of an electronic device according to various embodiments of the disclosure.

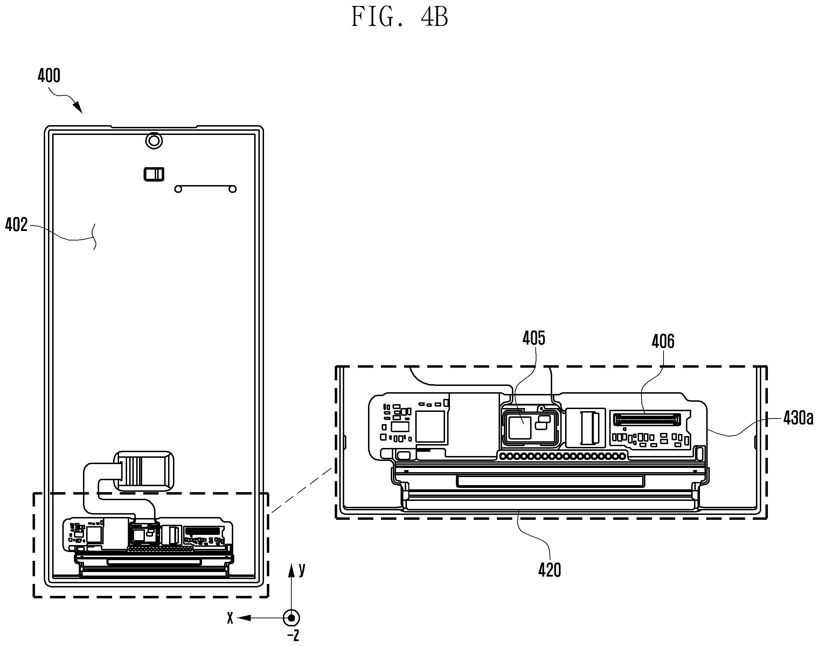

FIG. 4B is a rear view illustrating the display 400 of the electronic device according to various embodiments of the disclosure.

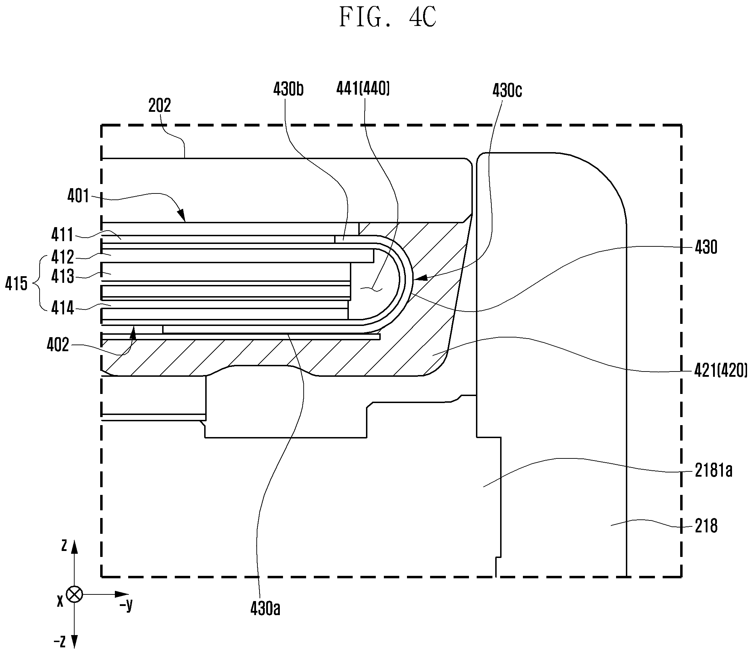

FIG. 4C is a cross-sectional view illustrating the display 400 of the electronic device according to various embodiments of the disclosure.

FIG. 4C is a cross section taken along line 7-7 of FIG. 2A.

Referring to FIGS. 4A to 4B, an electronic device (e.g., the electronic device 100 of FIG. 1 and the electronic device 200 of FIGS. 2A to 3) may include a display 400. The display 400 may include a front surface portion 401 oriented in a first direction (e.g., the z direction in the drawings), a rear surface portion 402 oriented in a direction opposite to the front surface portion 401 (e.g., the -z direction in the drawings), and a side surface portion 403 oriented in a lateral direction of the display 400 (e.g., the x-axis direction and/or the y-axis direction in the drawings) between the front surface portion 401 and the rear surface portion 402.

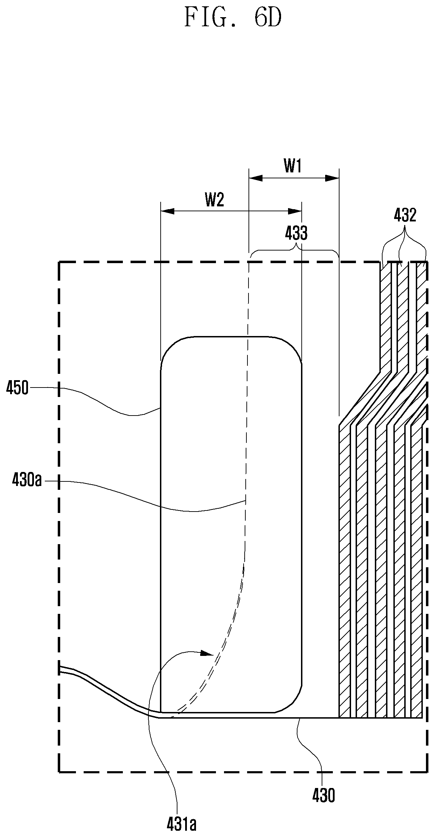

The display 400 may include a first region 408 (referred to, e.g., as an "active region") in which visual information is displayed and a second region 409 (described later) (referred to, e.g., as a "bezel" or a "black matrix") including a bending portion 430 (e.g., the bending portion 430 of FIG. 4C). A conductive pattern (e.g., the conductive pattern 432 of FIG. 6D) electrically connected to the first region 408 to supply information and signals to pixels of the first region 408 may be formed in the bending portion 430.

Referring to FIGS. 4B and 4C, the display 400 may include a plurality of layers. For example, the display 400 may include a panel layer 411 configured to display visual information in a first direction (e.g., the z direction in the drawings) and a back layer 415 disposed under the panel layer 411 (e.g., in a direction opposite to the first direction (-z direction)). The back layer 415 may include layers such as a light absorption layer 412, a protective layer 413, and/or a support plate 414. In various embodiments, a lower surface of a lowermost layer of the back layer 415 (e.g., a surface of the support plate 414 oriented in the -z direction in the drawings) may be the rear surface portion 402 of the display 400.

In various embodiments, an electronic device (e.g., the electronic device 100 of FIG. 1 and the electronic device 200 of FIGS. 2A, 2B, and 3) may include a transparent cover layer 202 (e.g., the front surface plate 202 of FIGS. 2A, 2B, and 3), and the display 400 may be disposed under the transparent cover layer 202 (e.g., in the -z direction). For example, the panel layer 411 may be disposed under the transparent cover layer 202, and the back layer 415 may be disposed under the panel layer 411.

In various embodiments, the panel layer 411 may include a bending portion 430. The bending portion 430 may be a portion extending from an edge of the panel layer 411 in a second direction (e.g., the -y direction in the drawings, which may be referred to as a "lateral direction"). For example, one end 430b of the bending portion 430 may be coupled to a lateral side of the panel layer 411. In various embodiments, the bending portion 430 may be an extension of a plastic substrate of the panel layer 411 of the display 400, such as a chip on plastic (COP). In some embodiments, the bending portion 430 may include a flexible printed circuit board electrically connected to a substrate of the display 400, such as a chip on FPCB (COF). In various embodiments, the bending portion 430 may include a peripheral circuit configured to supply electrical signals and power to, for example, a portion corresponding to the first region 408 of the display 400.

In various embodiments, the panel layer 411 may include a flat portion 430a extending from the bending portion 430. The flat portion 430a may be, for example, a portion of the above-described COP or COF.

The flat portion 430a may be operatively connected to circuit elements of the display 400 positioned at the rear surface portion 402 of the display 400 (e.g., including a display driver IC (DDI) and a cable connector). The bending portion 430 may be bent from a lateral side of the display 400 toward a downward direction of the display 400 (a direction toward the rear surface portion 402, e.g., the -z direction in the drawings). The bending portion 430 may be positioned at the side surface portion 403 of the display 400. For example, the bending portion 430 may be positioned in the second region 409 of the display 400. As the bending portion 430 is bent in the downward direction (e.g., a direction opposite to the first direction, the -z direction in the drawings, and a direction toward the rear surface portion 402), the flat portion 430a may be disposed under the back layer 415 of the display 400. For example, the flat portion 430a may be positioned on the rear surface portion 402 of the display 400. As described above, by bending the bending portion 430 to be positioned under the back layer 415, a proportion of an area occupied on the front surface of the display 400 by the second region which is not used for displaying image information (e.g., a bezel and/or a black matrix) may be reduced, and a proportion of the area of the first region 408 for displaying visual information may be increased.

An inner side and an outer side of the bending portion 430 may be defined based on a radius of curvature of the bending portion 430. That is, a position located closer to the bending portion 430 in a direction of a radius of curvature from a center of curvature of the bending portion 430 may be referred to as an "inner side of the bending portion 430," and a position located farther from the bending portion 430 in the direction of the radius of curvature may be referred to as an "outer side of the bending portion 430." For example, in FIG. 4C, a region positioned between the side surface (e.g., the surface oriented in the second direction (the -y direction)) of the back layer 415 of the display 400 (e.g., the light absorption layer 412, the protective layer 413, and/or the support plate 414) and the bending portion 430 may be referred to as an "inner side of the bending portion 430," and a region positioned in the second direction (the -y direction) with respect to the bending portion 430 may be defined as an "outer side of the bending portion 430."

The display 400 may include a protective member 420. The protective member 420 may be positioned in a region located adjacent to the side surface of the display 400 and surrounded by the cover layer 202, the side surface frame 218, and the inner frame 2181a. The protective member 420 may be in close contact with a lateral side of the display 400 (the second direction, e.g., the -y direction in the drawings). In various embodiments, the protective member 420 may be disposed to surround an outer surface (also referred to as an outer peripheral surface or an outer circumferential surface) 430c of the bending portion 430.

In various embodiments, the protective member 420 may include a first resin portion 421 (e.g., an epoxy resin portion). For example, the protective member 420 may be formed by molding the first resin portion 421 in an uncured state with respect to side portions 431a of the bending portion 430 and curing the molded first resin portion. The protective member 420 including the molded first resin portion 421 may be referred to by a term such as "molding" or "molded portion."

In various embodiments, the display 400 may include a buffer region 440. The buffer region 440 may be positioned on an inner side of the bending portion 430. In various embodiments, the buffer region 440 may include an air gap region 441. A region that is not filled with a material such as resin (e.g., the first resin portion 421) may be present at the inner side of the bending portion 430. For example, the inner side of the bending portion 430 may be entirely or partially left empty so that an air layer or an air cell is formed.

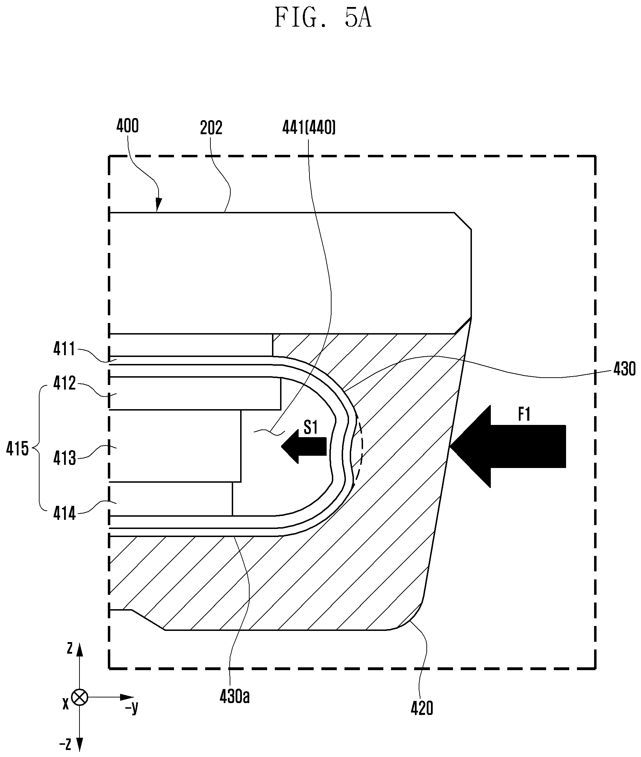

FIG. 5A is a cross-sectional view of the display 400 according to various embodiments of the disclosure.

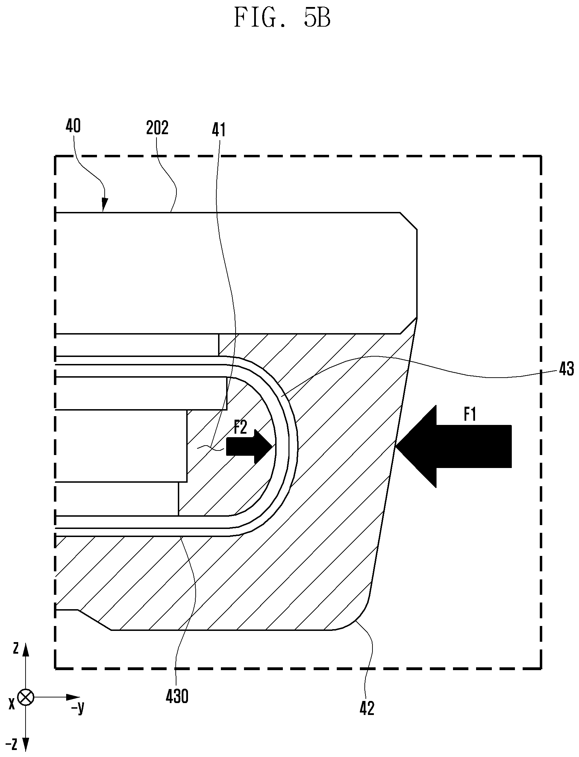

FIG. 5B is a cross-sectional view of a display 40 according to a comparative example.

Referring to FIG. 5A, when a force or impact F1 is applied from the outside to the side surface of the display 400 according to the disclosure, the buffer region 440 positioned at the inner side of the bending portion 430 may absorb the impact F1. For example, the air gap region 441 of the buffer region 440 may provide a space in which the bending portion 430 may be deformed S1 by the impact F1. Accordingly, damage to the bending portion 430 may be prevented and/or reduced.

Referring to FIG. 5B, in the display 40 according to a comparative example, an inner side of the bending portion 43 may be filled with resin. For example, in a resin molding process for forming the protective member 42, resin may be filled into the inner side of the bending portion 43 and cured. According to the comparative example, when a force or impact F1 is applied to the side surface of the display 40, a reaction force F2 generated by the resin filled in the inner side of the bending portion 43 may occur, and deformation of the bending portion 43 for absorbing the impact F1 may be restricted. Accordingly, a risk of damage to the bending portion 43 due to the impact may increase.

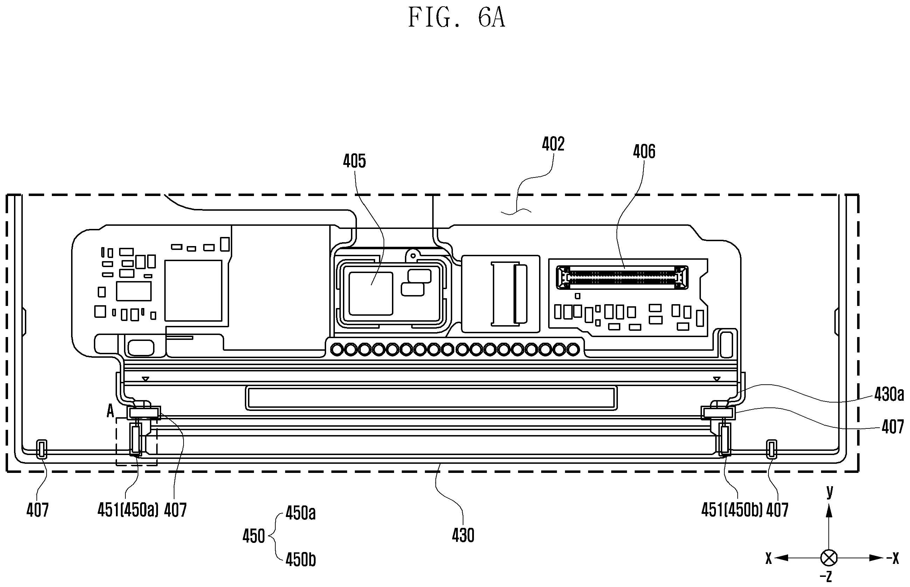

FIG. 6A is a rear view of the display 400 according to various embodiments.

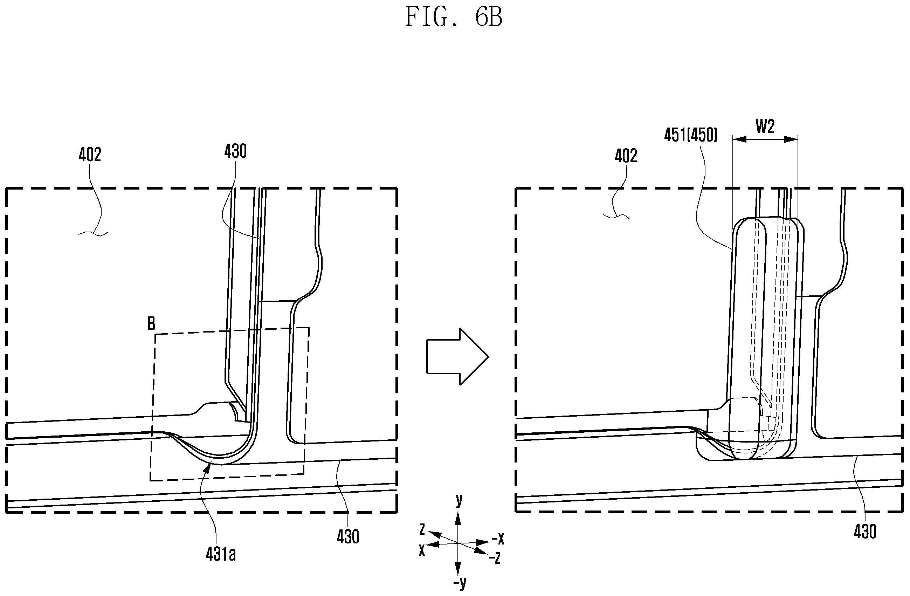

FIG. 6B is a perspective view illustrating a blocking member of the display 400 according to various embodiments.

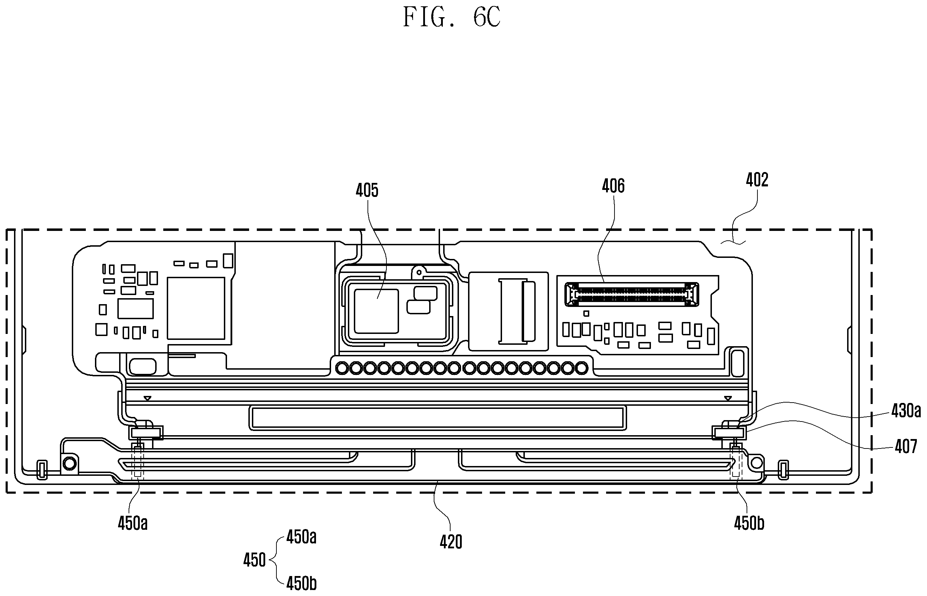

FIG. 6C is a rear view of the display 400 according to various embodiments.

FIG. 6D is an enlarged view illustrating the display 400 according to various embodiments.

FIG. 6A illustrates the display 400 in a state in which the protective member 420 of FIG. 6C is removed.

FIG. 6B is an enlarged view of portion A of FIG. 6A, and FIG. 6D is an enlarged view of portion B of FIG. 6A.

Referring to FIGS. 6A to 6C, in various embodiments, the display 400 may include a dam. In various embodiments, the blocking member 450 may be positioned at a side end 431a of the bending portion 430 with respect to the width direction of the bending portion 430 (e.g., the x direction and/or the -x direction in the drawings). In various embodiments, the blocking member 450 may include a first blocking member 450a disposed at one of opposite side ends 431a of the bending portion 430 and a second blocking member 450b disposed at the other side end 431a. In various embodiments, the blocking member 450 may be disposed at one of the opposite side ends 431a of the bending portion 430. The blocking member 450 may fully or partially close the internal space of the bending portion 430 at the side end 431a of the bending portion 430. For example, with respect to the side end 431a of the bending portion 430 in an open state as illustrated in (1) of FIG. 6B, the side end 431a of the bending portion 430 may be closed when the blocking member 450 is positioned as illustrated in (2) of FIG. 6B.

As the bending portion 430 is bent from the second direction (e.g., the -y direction) toward a direction opposite to the first direction (e.g., the -z direction) and enters the rear surface portion 402 of the display 400, each side end 431a of the bending portion 430 in a third direction (e.g., the x direction or the -x direction) may be in an open state, and thus uncured first resin portion 421 may flow into the inner side of the bending portion 430 during molding of the first resin portion 421. Accordingly, as the blocking member 450 closes the side end 431a of the bending portion 430, inflow of the first resin portion 421 into the bending portion 430 may be prevented or reduced. Because the blocking member 450 blocks a flow of resin, the blocking member 450 may be referred to as a dam.

In various embodiments, the blocking member 450 may be formed at the side end 431a of the bending portion 430 by applying a viscous resin. The viscous resin may include, for example, an adhesive seal 451 (also referred to as a bond seal) including a material such as silicone and/or synthetic rubber. For example, the blocking member 450 may be formed of the same material as an adhesive seal 407 used to seal other components of the display 400 during manufacture of the display 400. That is, during manufacture of the display 400, the application operation of the blocking member 450 may be performed collectively and simultaneously with the application operation of the adhesive seal 407.

Referring to FIG. 6C, in a state in which the blocking member 450 is formed, the protective member 420 may be formed by molding the first resin portion 421 on an outer side of the bending portion 430 so as to at least partially cover the blocking member 450, as illustrated in FIG. 6C. In this case, during molding of the first resin portion 421, the blocking member 450 may prevent or reduce inflow of the first resin portion 421 into the inner side of the bending portion 430 through opposite ends of the bending portion 430.

Referring to FIG. 6D, in various embodiments, the bending portion 430 may include a margin portion 433. The margin portion 433 may be a region of the bending portion 430 that is adjacent to the side end 431a and in which no conductive pattern 432 is formed. For example, the conductive pattern 432 may not be formed in a region extending inward by a predetermined distance W1 from an edge of the bending portion 430 in the width direction.

In various embodiments, the blocking member 450 may not overlap the bending portion 430 by more than a predetermined distance W1. That is, the blocking member 450 may not be positioned to overlap the conductive pattern 432 of the bending portion 430. If the blocking member 450 overlaps the conductive pattern 432, various stresses applied from the outside may be transmitted to the conductive pattern 432 through the blocking member 450, thereby causing damage and/or detachment of the conductive pattern 432 and thus increasing a risk of failure of the display 400.

In various embodiments, the width W1 of the margin portion 433 may be configured so that the blocking member 450 does not overlap the conductive pattern 432. For example, the predetermined distance W1 between an edge of the bending portion 430 and the conductive pattern 432 may be 50% or more of the width W2 of the blocking member 450. Accordingly, when the blocking member 450 is applied, overlap between the conductive pattern 432 and the blocking member 450 may be prevented or reduced.

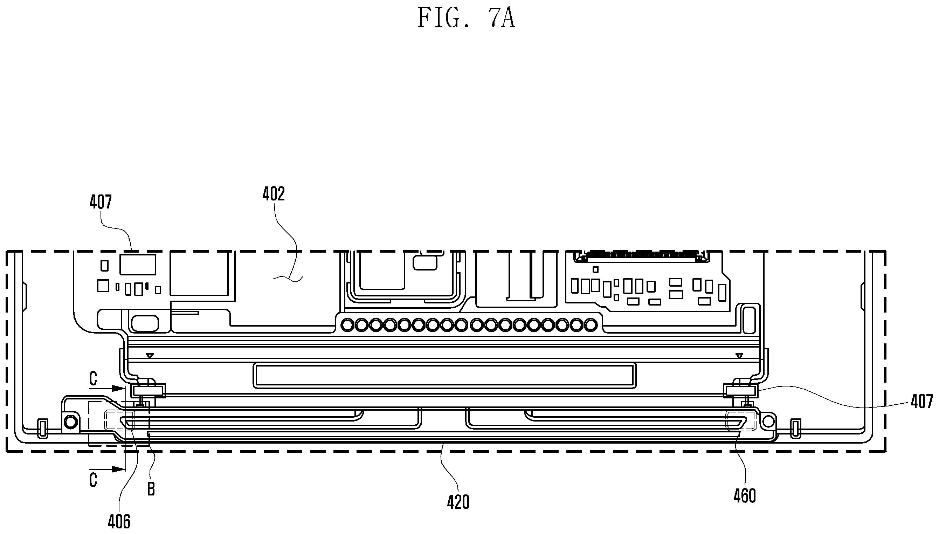

FIG. 7A is a plan view of the display 400 according to various embodiments.

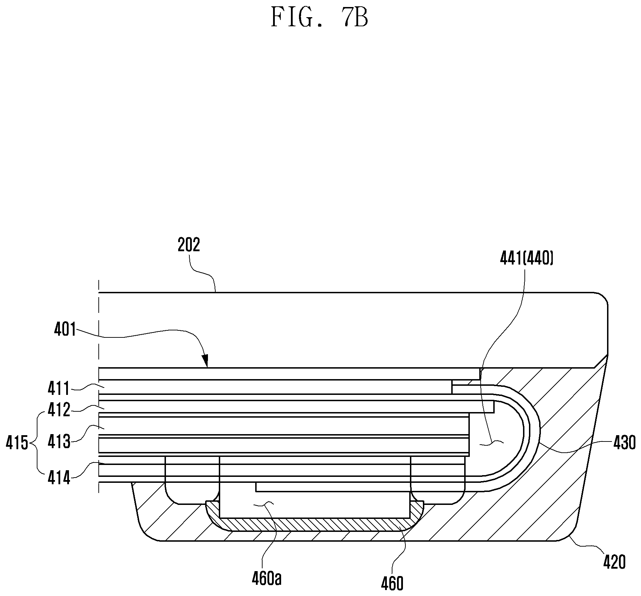

FIG. 7B is a cross-sectional view of the display 400 according to various embodiments.

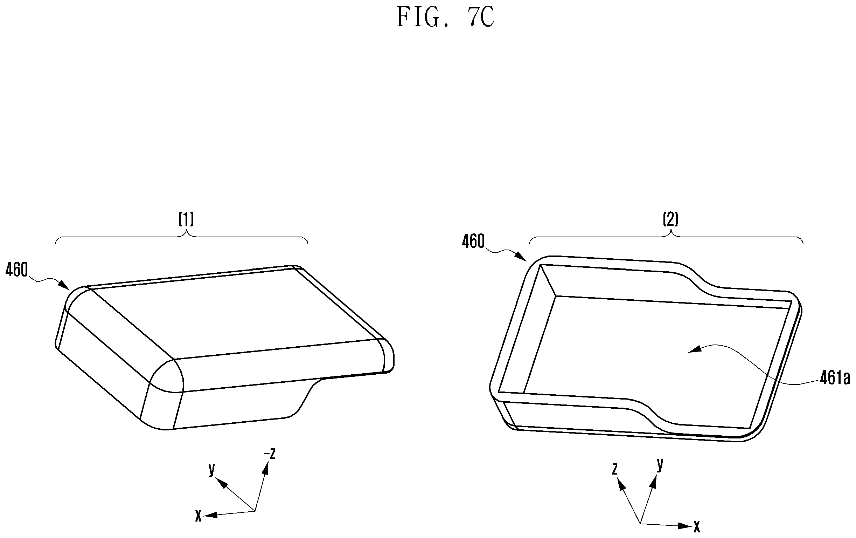

FIG. 7C is a perspective view of a bracket 460 according to various embodiments.

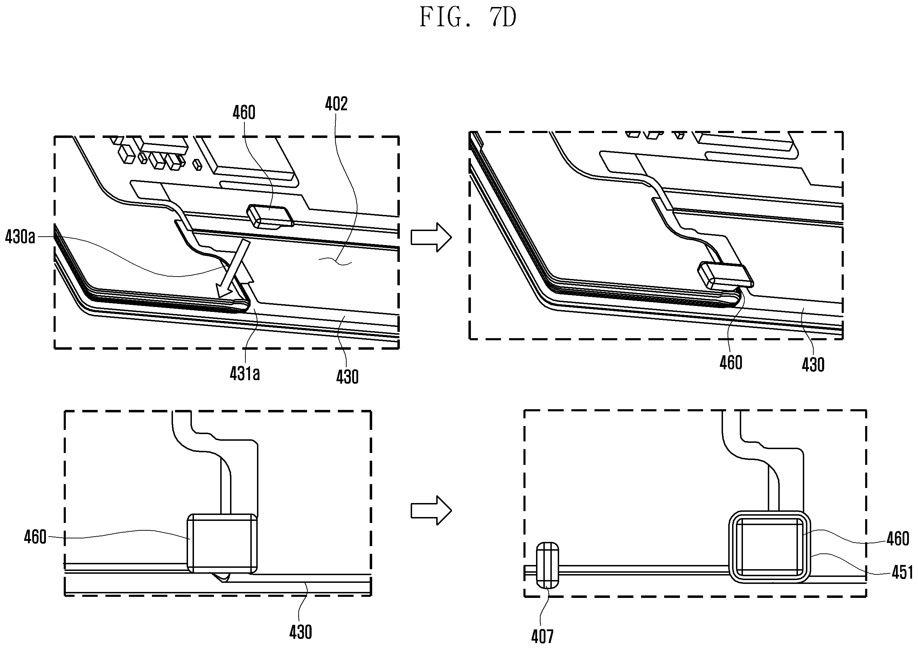

FIG. 7D is a perspective view illustrating operations of disposing the bracket 460 on the display 400 according to various embodiments.

The cross-section of FIG. 7B is taken along line C-C of FIG. 7A.

Referring to FIGS. 7A to 7C, the display 400 may further include a bracket 460. The bracket 460 may be a member configured to protect some components of a rear surface portion 402 of the display 400. For example, the bracket 460 may be disposed to at least partially cover the bending portion 430 and/or the flat portion 430a positioned in a direction of the rear surface portion 402 of the display 400.

In various embodiments, the bracket 460 may have an inner space 460a. For example, referring to (1) and (2) of FIG. 7C, the bracket 460 may be a member having the inner space 460a open in a first direction (e.g., the z direction in the drawings). Referring to FIG. 7B, when an impact or force is applied from the protective member 420, the inner space 460a of the bracket 460 may block or reduce transmission of the impact to at least a portion of the bending portion 430 and/or the flat portion 430a covered by the bracket 460.

The bracket 460 may be attached to the rear surface portion 402 of the display 400 by an adhesive seal 451 applied around the bracket 460. For example, referring to FIG. 7D, the bracket 460 may be positioned on a region of the rear surface portion 402 of the display 400 to be covered by the bracket 460, and the adhesive seal 451 may be applied along a periphery of the bracket 460.

In various embodiments, the bracket 460 may be disposed adjacent to a side end 431a of the bending portion 430. For example, the bracket 460 may be positioned such that a portion of the adhesive seal 451 applied around the bracket 460 closes the side end 431a of the bending portion 430. Accordingly, the adhesive seal 451 may simultaneously perform a function of attaching the bracket 460 and a function of closing the side end 431a of the bending portion 430.

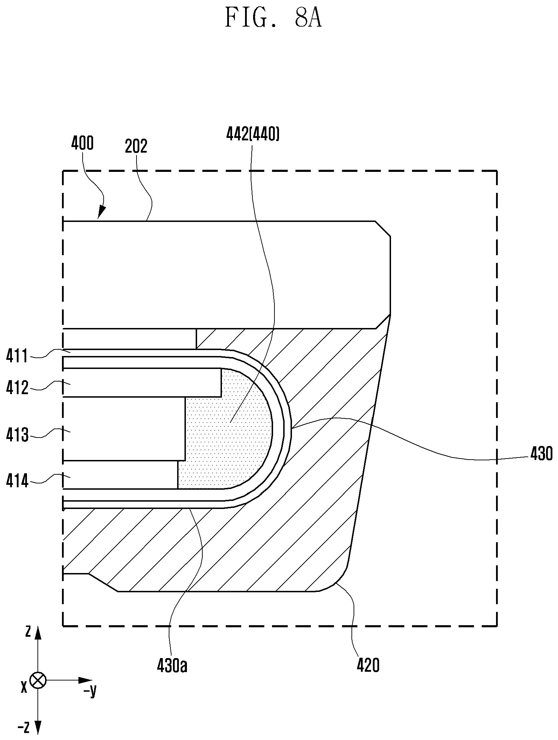

FIG. 8A is a cross-sectional view illustrating the display 400 according to various embodiments.

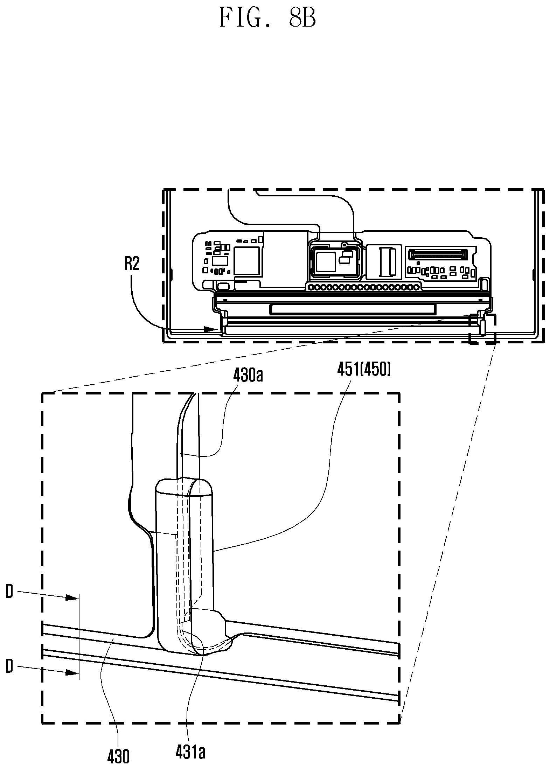

FIG. 8B is a plan view and a perspective view illustrating the display 400 according to various embodiments.

The cross-section of FIG. 8A is taken along line D-D of FIG. 8B.

Referring to FIG. 8A, the buffer region 440 may include a second resin portion 442. For example, the second resin portion 442 may at least partially fill the air gap region 441. The second resin portion 442 may include a material having higher flexibility than the first resin portion 421. For example, the second resin portion 442 may include a material such as thermoplastic polyurethane (TPU), thermoplastic polyolefin (TPO), and/or silicone, which has a lower elastic modulus than epoxy resin. In some embodiments, the second resin portion 442 may include various foamed polymer materials. The second resin portion 442 may be fully or partially filled in an inner space of the bending portion 430. Because the second resin portion 442 has higher flexibility than the first resin portion 421, the second resin portion 442 may absorb an impact transmitted to the bending portion 430 through the first resin portion 421 from the outside, thereby preventing or reducing damage occurring in the bending portion 430.

Referring to FIG. 8B, the display 400 may include the blocking member 450. The blocking member 450 may be positioned at one of the opposite side ends 431a of the bending portion 430 in the width direction (e.g., the x-axis direction) of the bending portion 430 (e.g., a side end 431a in the x direction or a side end 431a in the -x direction). The blocking member 450 may close one of the opposite side ends 431a of the bending portion 430. For a detailed configuration of the blocking member 450, the description made with reference to FIGS. 6A to 6C may be referred to, insofar as it does not contradict this embodiment.

The display 400 according to various embodiments may be manufactured such that one of the opposite side ends 431a of the bending portion 430 is closed by the blocking member 450, and the second resin portion 442 is injected (R2) through an opening formed at another one of the opposite side ends 431a.

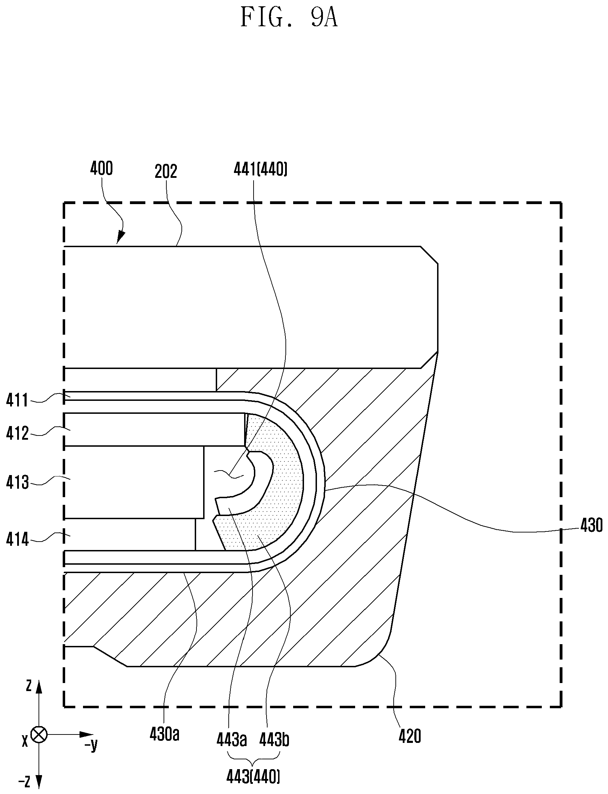

FIG. 9A is a cross-sectional view of a display 400 according to various embodiments.

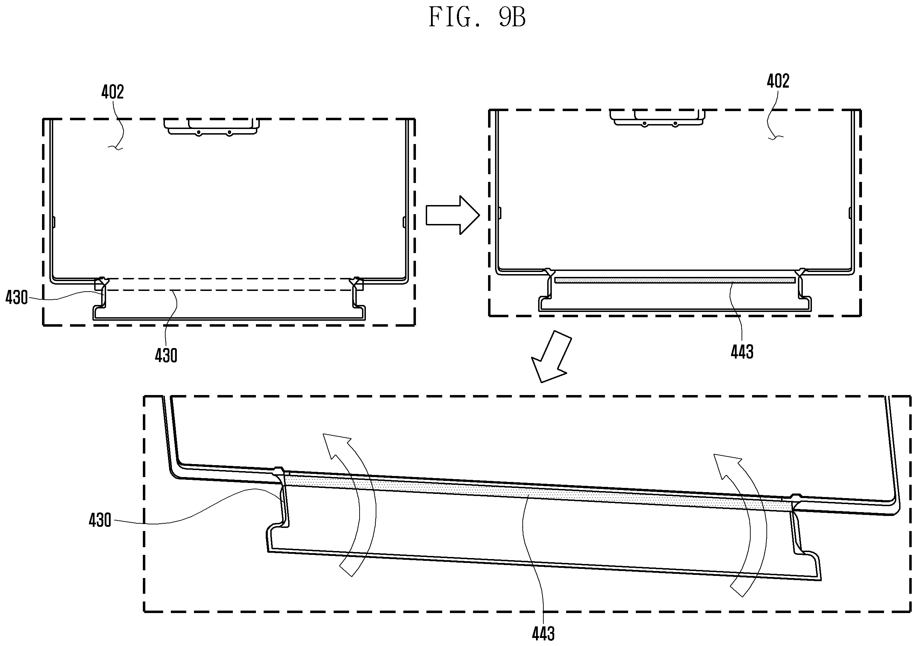

FIG. 9B is a view illustrating an operation of manufacturing the display 400 according to various embodiments of the disclosure.

Referring to FIG. 9A, a buffer region 440 may include a buffer member 443. For example, the buffer member 443 may be positioned in an air gap region 441. In various embodiments, the buffer member 443 may be attached to an inner surface of the bending portion 430 at an inner side of the bending portion 430. The buffer member 443 may include, for example, various polymer materials having a lower elastic modulus than the first resin portion 421, such as elastomers including silicone, TPU, TPO, FKM (fluoro rubber), and/or polyisoprene. In addition, the buffer member 443 may include various foamed polymer materials such as PE foam, PU foam, PP foam, and/or PS foam. Within the buffer region 440, the air gap region 441 may be positioned in a region where the buffer member 443 is not positioned. In various embodiments, the buffer member 443 may be a beam-shaped member extending in a width direction (e.g., the x-axis direction). In various embodiments, the buffer member 443 may have a layered structure including one or more layers. For example, the buffer member 443 may include a first layer 443a and a second layer 443b. The first layer 443a and the second layer 443b may have different materials and rigidities from each other.

Referring to FIG. 9B, in a state in which the bending portion 430 is unfolded, the buffer member 443 may be attached to a region D that is to become the bending portion 430. The bending portion 430 to which the buffer member 443 is attached in the unfolded state may be bent such that one end (the flat portion 430a) is positioned under the display 400, thereby forming the bending portion 430 having the buffer member 443 attached to the inner side thereof (e.g., a structure as illustrated in FIG. 9A).

According to the above-described operation, a preformed buffer member 443 may be positioned at the inner side of the bending portion 430. In addition, the buffer member 443 may be positioned at the inner side of the bending portion 430 without necessarily injecting a resin in a liquid or molten state into the inner side of the bending portion 430. Accordingly, because the buffer member 443 may have a complex layered structure or may include a material, such as a foamed polymer, that is unsuitable for injection in a liquid state, the buffer member 443 may effectively absorb an impact transmitted to the bending portion 430 from the outside at the inner side of the bending portion 430.

The electronic device according to various embodiments of the disclosure may be an electronic device including the display 400.

The display 400 may be disposed under the transparent cover layer 202.

The display 400 may include a back layer 415 disposed under the transparent cover layer 202.

The display 400 may include a panel layer 411 disposed under the transparent cover layer 202 and above the back layer 415. The panel layer 411 may include a bending portion 430 and a flat portion 430a extending from the bending portion 430, and the bending portion 430 may be bent such that the flat portion 430a is disposed under the back layer 415.

The display 400 may include a protective member 420 including a first resin portion 421 covering an outer circumferential surface 430c of the bending portion 430, and an air gap region 441 positioned between a side surface of the back layer 415 and the bending portion 430. The air gap region 441 may be at least partially closed at at least one of side ends 431a by at least one blocking member 450.

In various embodiments, the blocking member 450 may include a first blocking member 450a disposed at one of the side ends 431a and a second blocking member 450b disposed at another one of the side ends 431a.

In various embodiments, the bending portion 430 may include a conductive pattern 432 electrically connected to the panel layer 411. The bending portion 430 may include a margin portion 433, in which no conductive pattern 432 is disposed, extending by a predetermined distance from the side end 431a in the width direction. The predetermined distance may be equal to or greater than 50% of the width of the blocking member 450.

In various embodiments, the blocking member 450 may include an adhesive seal 451 applied to the bending portion 430.

In various embodiments, the display 400 may include a bracket 460 disposed to partially cover a region adjacent to the side end 431a of the bending portion 430.

In various embodiments, the adhesive seal 451 may be applied along an outer periphery of the bracket 460 so as to fix the bracket 460 to the bending portion 430.

In various embodiments, the display 400 may include a second resin portion 442 at least partially filling the air gap region 441 and having a lower elastic modulus than the first resin portion 421.

According to various embodiments, the display 400 may include a blocking member 450 positioned at one of opposite side ends 431a of the bending portion 430 in the width direction of the bending portion 430.

The second resin portion 442 may be injected into an inner space of the air gap region 441 through another one of the opposite side ends 431a at which the blocking member 450 is not disposed.

In various embodiments, the display 400 may include a buffer member 443 attached to an inner surface of the bending portion 430.

In various embodiments, the buffer member 443 may have a beam shape extending in the width direction of the bending portion 430.

According to various embodiments of the disclosure, the display 400 may be configured to display visual information in a first direction, and may include a panel layer 411 including a bending portion 430 and a flat portion 430a extending from the bending portion 430, and a back layer 415 positioned in a direction opposite to the first direction with respect to the panel layer 411. The bending portion 430 may be bent such that the flat portion 430a is positioned in the direction opposite to the first direction with respect to the back layer 415. The display 400 may further include a protective member 420 including a first resin portion 421 positioned on a surface of the bending portion 430 oriented in the second direction. The display 400 may further include an air gap region 441 positioned between a surface of the back layer oriented in the second direction and the bending portion 430.

In various embodiments, the display 400 may further include a blocking member 450 disposed at a side end 431a of the bending portion 430 in the width direction of the bending portion 430 to at least partially close the air gap region 441.

In various embodiments, the bending portion 430 may include a margin portion 433, in which no conductive pattern 432 is disposed, extending by a predetermined distance from the side end 431a in the width direction. The predetermined distance may be equal to or greater than 50% of the width of the blocking member 450.

In various embodiments, the blocking member 450 may include an adhesive seal 451 applied to the bending portion 430.

In various embodiments, the display 400 may further include a bracket 460 disposed to partially cover a position adjacent to the side end 431a of the bending portion 430.

In various embodiments, the adhesive seal 451 may be applied along an outer periphery of the bracket 460 so as to fix the bracket 460 to the bending portion 430.

In various embodiments, the display 400 may further include a second resin portion 442 at least partially filling the air gap region 441 and having a lower elastic modulus than the first resin portion 421.

According to various embodiments, the display 400 may include a blocking member 450 positioned at one of opposite side ends 431a of the bending portion 430 in the width direction of the bending portion 430, and the second resin portion 442 may be injected into an inner space of the air gap region 441 through another one of the opposite side ends 431a.

According to various embodiments, the display 400 may include a buffer member 443 attached to the bending portion 430 on an inner surface of the air gap region 441.

According to various embodiments, the buffer member 443 may have a beam shape extending in a width direction of the bending portion 430.

The embodiments disclosed in the specification and drawings are provided merely to easily describe the technical features according to the embodiments disclosed herein and to help understanding of the embodiments disclosed herein and are not intended to limit the scope of the embodiments disclosed herein. Accordingly, the scope of various embodiments disclosed herein is to be construed as including all changes or modifications derived based on the technical idea of the various embodiments disclosed herein, in addition to the embodiments disclosed herein.

## Claims

1. An electronic device comprising:
a transparent cover layer (202); and
a display (400) disposed under the transparent cover layer (202),
wherein the display (400) includes:
a back layer (415) disposed under the transparent cover layer (202),
a panel layer (411) disposed under the transparent cover layer (202) and above the back layer (415), the panel layer (411) including a bending portion (430) and a flat portion (430a) extending from the bending portion (430), the bending portion (430) being bent such that the flat portion (430a) is disposed under the back layer (415),
a protective member (420) including a first resin portion (421) covering an outer circumferential surface (430c) of the bending portion (430), and
an air gap region (441) positioned between a side surface of the back layer (415) and the bending portion (430), and
wherein the air gap region (441) is at least partially closed by at least one blocking member (450) disposed at at least one of opposite side ends (431a) of the bending portion (430).

2. The electronic device of claim 1, wherein the blocking member (450) includes:
a first blocking member (450a) disposed at one of the opposite side ends (431a); and
a second blocking member (450b) disposed at another one of the opposite side ends (431a).

3. The electronic device of claim 1, wherein the bending portion (430) includes:
a conductive pattern (432) electrically connected to the panel layer (411); and
a margin portion (433) extending a predetermined distance in a width direction of the bending portion (430) from at least one of the opposite side ends (431a), in which the conductive pattern (432) is not disposed, and
wherein the predetermined distance is equal to or greater than 50% of a width of the blocking member (450).

4. The electronic device of claim 2, wherein the blocking member (450) includes an adhesive seal (451) applied to the bending portion (430).

5. The electronic device of claim 4, wherein the display (400) includes a bracket (460) disposed to partially cover a region adjacent to each of the opposite side ends (431a) of the bending portion (430).

6. The electronic device of claim 5, wherein the adhesive seal (451) is applied along an outer periphery of the bracket (460) so as to fix the bracket (460) to the bending portion (430).

7. The electronic device of claim 1, wherein the display (400) includes a second resin portion (442) at least partially filling the air gap region (441) and having a lower elastic modulus than the first resin portion (421).

8. The electronic device of claim 7, wherein the blocking member (450) is positioned at one of the opposite side ends (431a) of the bending portion (431) in a width direction of the bending portion (430), and
wherein the second resin portion (442) is injected into an inner space of the air gap region (441) through another one of the opposite side ends (431a).

9. The electronic device of claim 1, wherein the display includes a buffer member (443) attached to an inner surface of the bending portion (430).

10. The electronic device of claim 9, wherein the buffer member (443) has a beam shape extending in a width direction of the bending portion (430).

11. The electronic device of claim 1, wherein the panel layer is configured to display visual information in a first direction, and
wherein the back layer is positioned in a direction opposite to the first direction with respect to the panel layer.

12. The electronic device of claim 11, wherein the bending portion is bent from a second direction, perpendicular to the first direction, toward the direction opposite to the first direction.

13. The electronic device of claim 12, wherein the flat portion is positioned in the direction opposite to the first direction with respect to the back layer.

14. The electronic device of claim 13, wherein the first resin portion is positioned on a surface of the bending portion oriented in the second direction.

15. The electronic device of claim 13, wherein the air gap region is positioned between a surface of the back layer oriented in the second direction and the bending portion.
